Europäisches Patentamt

European Patent Office

Office européen des brevets

(11) Veröffentlichungsnummer: **0 131 257**

**A2**

(12) # EUROPÄISCHE PATENTANMELDUNG

(21) Anmeldenummer: 84107832.2

(22) Anmeldetag: 05.07.84

(51) Int. Cl.⁴: **B 29 C 63/00**

(30) Priorität: 09.07.83 DE 3324791

(43) Veröffentlichungstag der Anmeldung:
16.01.85 Patentblatt 85/3

(84) Benannte Vertragsstaaten:
DE FR GB IT NL

(71) Anmelder: HOECHST AKTIENGESELLSCHAFT
Postfach 80 03 20
D-6230 Frankfurt am Main 80(DE)

(72) Erfinder: Eckner, Günter

Deceased(DE)

(54) **Verfahren zur Beschichtung von metallischen Substraten.**

(57) Verfahren zur Beschichtung von metallischen Substraten in mehreren Stufen mit härtbaren Harzen, Ethylen-vinyl-copolymerisaten und Olefin-Polymeren, wobei ein Folienband aus den erstgenannten beiden Komponenten auf ein metallisches Substrat, das eine Temperatur von mindestens 200°C hat, aufgebracht wird, und das heiße, beschichtete Substrat in zweiter Stufe mit einer Schicht eines Olefin-Polymeren versehen wird. Das Folienband besteht aus A) einer Unterlage aus mindestens einem Copolymerisat auf Basis Ethylen- und Vinylverbindungen und B) mindestens einem festen, mit der Unterlage verbundenen wärmehärtbaren Kunstharz mit funktionellen Gruppen wie hydroxylgruppenhaltige Polyester, vernetztbare Acrylatharze und Epoxydharze. Die Komponente B) ist bei diesem Folienband schichtartig und einseitig mit der Komponente A) verschmolzen und wird mit der die Komponente B) enthaltenen Seite auf das metallische Substrat aufgebracht. Nach dem Verfahren können neben Rohren auch metallische Formteile jeder Art und Größe, Behälter, Bauelemente u.ä. oder auch Reparatur- oder Schweißstellen an metallischen Substraten beschichten werden.

HOECHST AKTIENGESELLSCHAFT HOE 83/F 125 Dr.K/St

0131257

## Verfahren zur Beschichtung von metallischen Substraten

Die Beschichtung von Rohren mit Epoxidharzen ist bekannt. Derart beschichtete Rohre zeigen eine gute Beständigkeit gegen Feuchtigkeit und Beschädigung z.B. durch Stoß, Schlag, Unterwänderung u.ä.. Man hat versucht, diese beschichteten Rohre zusätzlich mit Polyäthylen zu ummanteln, was jedoch zu Haftungsschwierigkeiten der Polyäthylenschicht an der darunter liegenden Epoxidschicht führte. Aus diesem Grunde wurden die verschiedensten Materialien als Haftvermittler zwischen diesen beiden Schichten eingesetzt, die nach den unterschiedlichsten Methoden aufgebracht wurden, z.B. Heißschmelzkleber, vielfach auf Basis von Äthylen-Acrylsäure-Mischpolymerisaten; aber auch extrudierte Folienbänder dienten zur Aufbringung der Zwischenschicht.

So ist aus der DE-PS 1 965 802 ein Verfahren zum Ummanteln eines Stahlrohres bekannt, bei dem auf eine aushärtende Epoxidharzschicht zunächst ein extrudiertes Folienband aus "Acryl"-Äthylen-Copolymerisat und dann ein ebenfalls extrudiertes Folienband aus Polyäthylen aufgewickelt wird. Beide Bänder werden mit einer elastischen Anpreßrolle auf die noch heiße Rohroberfläche gedrückt, woraus eine Abkühlung mit Wasser erfolgt. Dieses Verfahren bringt zwar gute Ergebnisse, ist aber aufgrund der dreistufigen Verfahrensweise umständlich.

Andere bekannte Verfahren verwenden für den Aufbau der Grundschicht Gemische aus Epoxidharzen und modifizierten Polyolefinen, die, als Pulver oder aus Lösung auf das Metallsubstrat aufgetragen, nach der Härtung einen mehrschichtigen Film ergeben, auf den die Polyolefinoberschicht aufgebracht wird.

Die bereits vorgeschlagenen Verfahren haben sich in der Praxis zwar bewährt. Für bestimmte Zwecke ist es jedoch erwünscht, die Verfahren, insbesondere das Dreischichtenverfahren, Epoxidharz/"Acryl"-Äthylen-Copolymerisat/Poly-äthylen, und die danach hergestellten Produkte noch zu modifizieren bzw. zu verbessern.

Gegenstand der vorliegenden Erfindung ist ein Verfahren zur Beschichtung von metallischen Substraten der in den Ansprüchen definierten Art.

Durch das erfindungsgemäße Verfahren wird es z.B. möglich, beschichtete Rohre herzustellen, die auch erschwerten Verlegungsbedingungen, z.B. dem Transport über schwere oder steinige Böden standhalten, ohne daß Beschädigungen der Rohrbeschichtung eintreten. Außerdem wird eine bessere, zumindest gleich gute Haftung der Beschichtung, wie sie aus dem Stand der Technik bekannt ist, erzielt. Schließlich wird das Verfahren erheblich vereinfacht. Besonders vorteilhaft ist, daß der bisher erforderliche zweistufige, getrennte Aufbau der beiden Schichten -härtbares Harz und Haftvermittler- oder der einstufige Aufbau aus einer Mischung zweier Komponenten nunmehr mit Hilfe des vorgefertigten, leicht verwendbaren Folienbandes in einem Arbeitsgang erfolgen kann und daß trotzdem alle günstigen Eigenschaften der Beschichtung erreicht werden. Weiterhin kann das Folienband bequem gelagert und gehand-habt werden. Es können auch - bei geeigneten Aufbringungsmethoden- beispielsweise Reparatur- oder Schweißstellen, z.B. Rohrverbindungen einwandfrei beschichtet werden. Die abschließende Polyäthylenschicht, die fest mit der Folienbandschicht verbunden wird, dient nur noch dem äußeren Schutz.

Ferner kann das Folienband in beliebige Formstücke gebracht werden, z.B. durch Schneiden, Stanzen u.ä., die dann in geeigneten Vorrichtungen mit Metallsubstraten verbunden werden können. Gleichzeitig kann dabei auch die Seite der Folie, die aus der Komponente A) besteht, mit thermoplastischen Materialien wie Polyolefinen verbunden werden. Somit kann das Folienband ebenfalls als Abdichtmaterial verwendet werden, wobei bei Einsatz von Polyolefinen als abschließende Schicht das Material u.a. auch in der Lebensmittelindustrie Verwendung finden kann.

Die Herstellung des Folienbandes kann auf verschiedene Weise geschehen. So ist es z.B. möglich, aus der Komponente A) zuerst eine Folie im Extrusionsverfahren herzustellen und diese anschließend bei Temperaturen der Folie von 100 bis 140$^{\circ}$C mit der Komponente B) in Pulverform einseitig zu beschichten. Auch kann die Komponente A) in fester Form auf eine mit z.B. Polytetrafluoräthylen beschichtete, erhitzte Unterlage in Form eines Bandes oder Platte aufgebracht werden, wobei sie schmilzt und eine Schicht bildet, die nach Abkühlung auf 100 bis 140$^{\circ}$C mit der Komponente B) in Pulverform beschichtet und nach Abkühlung auf 70 bis 80$^{\circ}$C von den Metallunterlage abgezogen wird. Die Metallunterlage wird dabei im allgemeinen auf Temperaturen erhitzt, die über der Auftragstemperatur liegt, d.h., der Temperatur der Komponente A) während des Auftragens der Komponente B). Die Schichtbildung aus der Komponente A) kann aber auch bei gleicher Temperatur erfolgen wie die Beschichtung mit B), so daß eine Abkühlung zwischen den beiden Verfahrensschritten nicht nötig ist. In allen Fällen kommt es zu einem Schmelzverbund der beiden Komponenten, wobei ein Folienband gebildet wird, das aus einer Grundschicht aus der Komponente A) und einer Deckschicht aus Komponente B) besteht. Die Temperatur der Komponentenschicht A) beim Auftragen der Komponente B) in Pulverform beträgt vorzugsweise 110 bis 140, insbesondere 120 bis 135$^{\circ}$C. Die Stärke der gebildeten Grundschicht aus der Komponente A), d.h. die Foliendicke, beträgt im allgemeinen 45 bis 250, vorzugsweise 80 bis 200 µm, auf die ein Auftrag aus der Komponente B) von 45 bis 250, vorzugsweise 150 bis 250 µm erfolgt[*]. Zweckmäßig wird das Folienband über die ganze Fläche mit Perforationslöchern versehen, die einen Durchmesser von höchstens 1 mm aufweisen. Diese dienen dazu, bei der Beschichtung evtl. auftretende Gasbildung abzuleiten.

Liegen die Komponenten A) und B) in Form von Pulvern vor, so können zur Schichtformung Aufriesel-, Streu- oder Aufblasverfahren, vorzugsweise aber das elektrostatische Beschichtungsverfahren angewandt werden.

Das Folienband oder dessen Abschnitte wird mit der Epoxidharzseite auf das vorerwärmte metallische Substrat, das zweckmäßig eine Temperatur von 200 bis 360, vorzugsweise 240 bis 310°C aufweist, aufgebracht. Bei der Rohrbeschichtung rotiert z.B. das Rohr schraubenlinienförmig auf einem Schrägrollgang, wobei das Folienband auf das erwärmte Rohr aufgewickelt wird.

Die Bandbreite muß mindestens gleich der Steigung der schraubenlinienförmigen Bewegung des Rohres sein. Das Band wird z.B. mit geeigneten Verfahren an die Rohroberfläche gepreßt und verschmilzt mit dieser. Anschließend wird das Rohr gegebenenfalls abgekühlt bis zu der für das Olefin-Polymere geeigneten Auftragstemperatur.

Den festen, härtbaren Harzen B) werden im allgemeinen die zur Härtung erforderlichen Verbindungen zugesetzt; mitunter werden jedoch auch handelsübliche Harz-Härter-Gemische verwendet. Von den wärmehärtenden Kunstharzen B) sind die Epoxidharze besonders bevorzugt. Geeignete Epoxidharze sind z.B. feste Harze auf der Basis von Diphenylol-

[*] so daß die Gesamtstärke des Folienbandes 90 bis 500 µm betragen kann.

propan und/oder Diphenylolmethan und Epihalogenhydrin wie Epibromhydrin, insbesondere aber Epichlorhydrin, mit einem Epoxidäquivalentgewicht von 600 bis 2000, vorzugsweise 700 bis 1500, insbesonders 875 bis 1100, gegebenenfalls auch ein Gemisch mehrerer Epoxidharze.

Als Härter für die Epoxidharze kommen z.B. in Frage: Polycarbonsäureanhydride, Polyamidoamine, sekundäre und tertiäre Amine, Dicyandiamid und Biguanid sowie davon abgeleitete substituierte Verbindungen, Aminharze wie Melaminharze, Hexamethylentetramin in Verbindung mit Phenolharzen vom Typ Novolak, Phenolharze, COOH-funktionelle Polyester und Acrylharze, einzeln oder im Gemisch.

Geeignete härtbare Polyester als Komponente B) sind beispielsweise ungesättigte Polyester mit freien OH-Gruppen, die mit Polycarbonsäuren, deren Anhydriden und/oder mit -gegebenenfalls verkappten - Polyisocyanaten gehärtet werden.

Als Komponente B) sind auch härtbare Acrylharze z.B. selbstvernetzende verätherte methoxylierte Harze auf der Grundlage von Acryl- und/oder Methacrylamiden geeignet. Es lassen sich auch Harze aus Acryl- und/oder Methacrylsäureestern mehrwertiger Alkohole verwenden, die mit Aminen, vor allem Aminharzen oder mit Polyisocyanaten gehärtet werden. Ferner eignen sich Acrylharze mit eingebauten Glycidylgruppen, die mit Polycarbonsäure-Komponenten gehärtet werden.

Die Teilchengröße der Harze B) kann in weitem Rahmen schwanken. So können Epoxidharze mit z.B. 0,2 - 250, vorzugsweise 1 - 100 µm Teilchengröße eingesetzt werden; die Größe der Teilchen der anderen Harze B) liegt z.B. zwischen 0,5 und 250, vorzugsweise zwischen 1 und 100 µm.

Die Komponente A), bei der der Begriff "Vinylverbindungen" (Meth-)Acrylderivate einschließt, enthält als wesentlichen Bestandteil mindestens ein Copolymeres auf Basis von Äthylen und (Meth-)Acrylsäure und gegebenenfalls mindestens ein weiteres copolymerisierbares Monomeres. Es können aber auch Copolymerisate eingesetzt werden, die frei von (Meth-)Acrylsäure sind. Copolymerisierbare Monomere sind z.B. Vinylacetat, (Meth-)Acrylsäureester mit 1 bis 18 C-Atomen im Alkylrest und andere, wobei im Polymerisat der Vinylacetatrest ganz oder teilweise zu Vinylalkohol verseift werden kann. Die Komponente A) kann eine unterschiedliche chemische Zusammensetzung aufweisen. Sie kann z.B. a) ein Vinylacetat-Äthylen-(Meth)Acrylsäure-(Meth)Acrylsäureester-Copolymeres (Schmelzindex z.B. etwa 15 bis 30 g/10 min.), b) ein Vinylacetat-Äthylen-(Meth-)Acrylsäure-Copolymeres (Schmelzindex z.B. etwa 20 bis 35 g/min.), c) Vinylacetat-Äthylen-Vinylalkohol-Copolymeres (Schmelzindex z.B. etwa 55 bis 75 g/10 min.), d) (Meth-)Acrylsäure-Äthylen-Copolymeres mit mindestens 85 % Gew.-% Äthylen (Schmelzindex z.B. etwa 5 bis 80 g/10 min.) oder e) (Meth-)Acrylsäureester-(Meth-)Acrylsäure-Äthylen-Copolymeres mit mindestens 80 Gew.-% Äthylen (Schmelzindex z.B. 10 bis 50 g/10 min) als Bestandteil enthalten. Der Monomerenanteil für die Herstellung des Copolymeren a) kann z.B. 5 bis 10 Gew.-% Vinylacetat, 5 bis 10 Gew.-% Acryl-und/oder Methacrylsäure, 0,5 bis 10 Gew.-% Acryl-und/oder Methacrylsäureester und mindestens 70 Gew.-% Äthylen, des Copolymeren b) 0,5 bis 10 Gew.-% Vinylacetat, 5 bis 10 Gew.-% Acryl- und/oder Methacrylsäure und mindestens 80 % Äthylen, des Copolymeren c) 0,5 bis 10 Gew.-% Vinylacetat, 5 bis 25 % Vinylalkohol und mindestens 65 Gew.% Äthylen, des Copolymeren d) 1 bis 15 Gew.-% (Meth-)Acrylsäure und mindestens 85 Gew.-% Äthylen und des Copolymeren e) 0,5 bis 10 Gew.-% (Meth-)Acrylsäureester, 0,5 bis 10 Gew.-% (Meth-)Acrylsäure und mindestens 80 Gew.-% Äthylen betragen. Die Estergruppe der Acryl- oder Methacrylsäureester-Komponente leitet sich von einwertigen Alkohlen mit 1 bis 18 C-Atomen ab.

In die Komponente A) kann gegebenenfalls auch bis zu 10, vorzugsweise bis zu 5 Gew.-% Polyolefin eingearbeitet werden.

Die Teilchengröße der Copolymerisate A) ist nicht von Wichtigkeit, da die Komponente über den schmelzflüssigen Zustand verarbeitet wird.

Die in zweiter Stufe aufgebrachte Schicht aus Olefin-Polymeren, die etwa bis 6 mm, vorzugsweise 1,5 bis 4 mm dick sein kann, dient dazu, die Grundschicht gegen Verletzungen zu schützen. Sie ist zweckmäßig hellfarbig und kann auch lichtstabilisiert sein. Sie kann z.B. als Pulver oder bei Gegenständen geeigneter Form, insbesondere Rohren, in Form eines Bandes mit 100 bis 400 µm, vorzugsweise 150 bis 250 µm, beispielsweise 0,2 mm Dicke aufgebracht werden. Geeignete Olefin-Polymere haben z.B. einen Schmelzindex von 0,3 bis 6,0, vorzugsweise 0,5 bis 2,0 g/10 min. Beispielsweise besteht sie aus Polyäthylen z.B. einem Polyäthylenpulver der Gruppe LLD, LD (niedere Dichte), MD, HD (hohe Dichte) oder Gemischen davon, Polypropylen oder Äthylen-Copolymeren, z.B. solchen aus denselben Komponenten wie bei den Copolymeren der Komponente A). Die Copolymeren können sich aber auch von denjenigen des Folienbandes unterscheiden. Den Olefin-Polymeren können auch Zusatzstoffe wie Polyvinylacetat, Ruß sowie Wärmestabilisatoren zugefügt werden. Die Menge dieser Zusatzstoffe kann insgesamt bis zu 10 Gew.-%, bezogen auf die Olefin-Polymeren, betragen.

Die Verfahren zur Aufbringung von z.B. Polyäthylen in Pulverform sind diegleichen, wie vorstehend für die Komponenten A) und B) beschrieben.

Als Lichtstabilisatoren für den hellfarbenen Polyäthylenfilm sind beispielsweise Verbindungen vom Benzotriazoltyp, aber auch andere für die Stabilisierung übliche Verbindungen geeignet.

Eine hellfarbige Deckschicht hat z.B. den Vorteil, einen guten Schutz der Rohre gegen zu starke Erwärmung bei längerer Lagerung im Freien unter starker Wärmeeinwirkung, z.B. durch Sonneneinstrahlung oder durch Verlegung in stark erwärmten Bodenschichten zu bewirken. Die Beschichtung aus dem Extruder gestaltet sich ebenfalls sehr einfach und zeitsparend ohne zusätzlichen apparativen Aufwand. Das aus dem Extruder austretende Band hat vorteilhaft einen Schmelzindex von mindestens 0,4 g/10 min.

Zweckmäßig hat das Olefin-Polymere bei der Pulverbeschichtung in zweiter Stufe eine Teilchengröße von 1 bis 600 µm, vorzugsweise 100 bis 400 µm. Ein Polyäthylenfilm z.B.bei der Rohrbeschichtung wird mit Vorteil in Form eines freitragenden Polyäthylenbandes aufgebracht. Das Aufbringen kann auf ein rotierendes Rohr erfolgen. Das bringt den Vorteil mit sich, daß das Band automatisch gewickelt werden kann. Die Bandbreite kann beliebig variiert werden. Sie beträgt z.B. mindestens 20 mm. Im allgemeinen wird von einer Bandbreite bis etwa 1 m Gebrauch gemacht. Beim Auftragen ist darauf zu achten, daß sich die einzelnen Windungen überlappen bzw. daß eine gegenseitige Verschweißung der einzelnen Windungen erfolgt, um einen einwandfreien Korrosionsschutz zu erzielen.

Wenn hellfarbiges Olefin-Polymermaterial eingesetzt wird, ist dieses vorzugsweise weiß. Jedoch kann auch eine andere Farbe gewählt werden, z.B. die Warnfarbe Gelb, aber auch Hellorgange, Hellblau, Hellgrün oder dergleichen. Gegebenenfalls können die hellfarbenen Bänder auch zur Kennzeichnung der Rohre dienen.

Die Aufbringung des Olefin-Polymeren z.B. Polyäthylen, erfolgt wie beschrieben auf die noch heiße, gehärtete bzw. sich im Härteprozeß befindliche geschmolzene Mischung des Folienbandes, wobei das Substrat beim Aufbringen eines Polyolefinbandes eine Temperatur von höchstens 260° C aufweisen soll, während beim Pulverauftrag die Temperatur bis 360, vorzugsweise bis 300° C betragen kann. Nach erfolgtem Aufbringen der Schicht bei Äthylenpolymeren wird das Substrat abgekühlt, z.B. an der Luft oder durch Wasserkühlung.

Falls das in der zweiten Verfahrensstufe aufgebrachte Olefin-Polymere aus einem Äthylen-Vinylacetat-Acryl- bzw. Methacrylsäure-Copolymeren besteht, wird zweckmäßig ein solches Copolymeres verwendet, dessen Vinylacetat-Anteile 15 bis 50, vorzugsweise 25 bis 40 Gew.-% und dessen Acryl- bzw. Methacrylsäure-Anteil 4 bis 15, vorzugsweise 6 bis 12 Gew.-% ausmacht.

Die Geschwindigkeit, mit der die Beschichtung mit dem Folienband und dem Olefin-Polymeren vorgenommen wird, kann in weiten Grenzen variieren. Sie ist von der Schichtdicke und dem metallischen Substrat abhängig. So ist beispielsweise bei einem Rohr mit einem äußeren Rohrdurchmesser von 50 bis 2000 mm eine Mindestschichtdicke zwischen 1,5 und 4 mm für einen ausreichenden Korrosionsschutz erforderlich.

Für die Beschichtung eines solchen Rohres von normalerweise 12 m Länge mit einem Durchmesser von 1500 mm und einem Überzug von 3,5 mm Schichtdicke werden nach dem erfindungsgemäßen Verfahren z.B. etwa 15 bis 45, im allgemeinen um 30 Minuten benötigt. Für die Beschichtung eines Rohres von 400 mm Durchmesser mit einer Schichtdicke von 1,5 mm sind für eine 12 m lange Beschichtung im allgemeinen etwa 8 bis 20, z.B. 15 Minuten erforderlich.

Die Anforderungen bezüglich Mindestschichtdicke, Porenfreiheit, Schälfestigkeit, Schlagfestigkeit, Eindruckwiderstand, Reißdehnung, spezifischem Umhüllungswiderstand, Wärme- und Lichtalterung gemäß Vorschriften von DIN 30 670 und DIN 30 671 werden durch die erfindunsgemäß hergestellten Beschichtungen voll erfüllt. Beispielsweise beträgt die nach DIN 30 670 für das Abziehen der Umhüllung geforderte mittlere Kraft 35 N/cm Streifenbreite.

Die nach dem erfindungsgemäßen Verfahren beschichteten metallischen Substrate finden vielseitige Verwendung. Vorzugsweise sind es Rohre, die wegen ihres Oberflächenschutzes vor allem für Rohrleitungen, z.B. für die Förderung von Erdöl, aber auch von anderen gasförmigen, flüssigen oder höherviskosen Stoffen, beispielsweise Erdgas, Wasser, Klärschlamm, Beton, Abwässern, Aufschlämmungen oder dergleichen geeignet sind.

Ein besonderer Vorteil ist dadurch gegeben, daß die erfindungsgemäß beschichteten Rohre eine erhöhte Wärmebeständigkeit aufweisen, so daß Fördergut, das eine erhöhte Temperatur, z.B. bis etwa $100^{O}$C aufweist, z.B. erhitzte Flüssigkeiten, ohne Beeinträchtigung des Überzugs über längere Zeiträume gefördert werden kann. Der Transport erhitzter Flüssigkeiten ist z.B. dann gegeben, wenn die Rohre hinter Kompressor-Stationen angeordnet sind. In diesen Stationen wird das zu fördernde Medium z.B. auf Temperaturen von etwa $150^{O}$C erwärmt. In dem nachfolgenden Rohrabschnitt ergibt sich somit eine Wärmebelastung, die zwischen der Umgebungstemperatur und $150^{O}$C liegt.

Besonders vorteilhaft ist die Verwendung der erfindungsgemäß beschichteten Rohre zur Verlegung in warmen oder heißen Gebieten, z.B. auch in der Wüste.
Aber auch andere metallische Substrate, bei denen es auf einen besonders widerstandsfähigen Oberflächenschutz ankommt, können gemäß dem erfindungsgemäßen Verfahren beschichtet werden. So können z.B. metallische Formteile jeder Art und Größe, Behälter, Bauelemente u.ä. beschichtet werden, wobei die Aufzählung nicht vollständig ist und das Verfahren den Gegebenheiten, z.B. auch einer Innenbeschichtung angepaßt werden muß. Zu Innenbeschichtungen zählen auch Dichtungen, z.B. Verschlußdichtungen in der Lebensmittelindustrie in Form von Deckeln, Kronenkorken u.ä.

In nachstehenden Beispielen bedeuten %
Gewichtsprozent. Die Schmelzindices beziehen sich in der gesamten Beschreibung stets auf $190^{\circ}C/2,16$ kg.

Beispiele

Herstellung des Folienbandes

1) Ein Acrylsäure-Äthylen-Copolymerisat, das etwa 92 Gew.-%
Äthylen enthielt (Schmelzindex 10 g/min), wurde aus einem
Extruder mit einer Breitschlitzdüse von 650 mm zu einer
Folie von einer Stärke von 150 µm extrudiert. Die Austrittstemperatur der Masse betrug $240^{\circ}C$ und fiel nach 350 mm
Weglänge unter Bildung einer Folie auf ca. 110 bis $115^{\circ}C$ ab.
An dieser Stelle wurde ein Epoxidharzpulver auf Basis von
Diphenylolpropan und Epichlorhydrin (Epoxidäquivalentgewicht 875 bis 1100), das 5 % Härter auf Basis cyclischer
tertiärer Amine enthielt und eine mittlere Teilchengröße
von 15 µm aufwies, auf die heiße Folie über ein Sieb aufgestreut. Die erhaltene Folie besaß eine Stärke von 250 µm
und zeigte keinen Abrieb.

2) Ein Stahlblech von 640 $cm^2$ Fläche wurde mit Polytetrafluoräthylen beschichtet und auf $150^{\circ}C$ erwärmt. Auf die
beschichtete Seite der Platte wurde ein Acrylsäure-Äthylen-
Copolymerisat wie in Beispiel 1 beschrieben, mit Hilfe
einer elektrostatischen Sprühpistole während 15 Sek. bei
einer Spritzleistung von 200 g/min aufgespritzt. Die Temperatur des Stahlblechs wurde anschließend auf die in der
nachstehenden Tabelle angeführten Temperaturen gesenkt und
ein Epoxydharz wie in Beispiel 1 ebenfalls elektrostatisch
bei einer Spritzleistung von 300 g/min in 8 Sek. aufgebracht.
Die Temperatur wurde weiter gesenkt und die gebildete Folie
bei $75^{\circ}C$ von dem Stahlblech abgezogen. Die Abriebwerte der
400 µm starken, erhaltenen Folien sind in der Tabelle angeführt.

| Beisp. | Copolymerisat | | Auftrag Epoxydharz | | Prüfwerte |
| | Temp($^{\circ}$C) | Zeit(s) | Temp($^{\circ}$C) | Zeit(s) | Abrieb |
| --- | --- | --- | --- | --- | --- |
| 2 a | 150 | 15 | 130 | 8 | O |
| b | 150 | 15 | 120 | 8 | O |
| c | 150 | 15 | 110 | 8 | O |
| d | 150 | 15 | 100 | 8 | schwach |

Rohrbeschichtung

3) Ein Eisenrohr (Außendurchmesser 108 mm, Wandstärke 10 mm, Länge 500 mm) wurde auf eine Temperatur von 300$^{\circ}$C erwärmt. Auf dieses erwärmte Eisenrohr wurde die erhaltene, auf 150 mm Breite zugeschnittene Extruder-Folie mit zum Rohr gerichteter Epoxydharzschicht aufgewickelt und mit einer mit Polytetrafluoräthylen beschichteten Walze angedrückt. Zum Zwecke der Abziehprüfung, d.h. der Haftwerte, wurde der Ansatz der Folie mit einem leicht schmelzenden Polyäthylenpulver auf dem Rohr befestigt. Ca. 5 Sekunden nach dem Aufwickeln des Folienabschnitts wurde bei ca. 280$^{\circ}$ C innerhalb 2 Minuten ein Polyäthylenpulver mit einem Schmelzindex von unter 2 g/10 min aufgerieselt, wobei die Temperatur auf ca. 240$^{\circ}$ C absank. Unter Ausnutzung der Wärmekapazität des erhitzten Rohres verschmolzen die Schichten zu einem homogenen Verbund von insgesamt 2,4 mm Dicke. Die Schälkraft nach DIN 30 670 betrug stets über 120 N/cm.

Patentansprüche:

1. Verfahren zur Beschichtung von metallischen Substraten in mehreren Stufen mit härtbaren Harzen, Äthylen-Vinyl-Copolymerisaten und Olefin-Polymeren, dadurch gekennzeichnet, daß in erster Stufe ein Folienband, das aus

A) einer Unterlage aus mindestens einem Copolymerisat auf Basis Äthylen und Vinylverbindungen, und

B) mindestens einem festen, mit der Unterlage verbundenen wärmehärtbaren Kunstharz mit funktionellen Gruppen aus der Gruppe hydroxylgruppenhaltiger Polyester, vernetzbarer Acrylatharze und Epoxydharze besteht, wobei die Komponente B) schichtartig und einseitig mit der Komponente A) verschmolzen ist, mit der die Komponente B) enthaltenden Seite auf ein metallisches Substrat, das eine Temperatur von mindestens 200°C hat, aufgebracht wird, und das heiße, beschichtete Substrat in zweiter Stufe mit einer Schicht eines Olefin-Polymeren versehen wird.

2. Verfahren nach Anspruch 1, dadurch gekennzeichnet, daß das Harz B) ein Epoxydharz auf Basis Diphenylolpropan und/oder -methan und Epichlorhydrin mit einem Epoxydäquivalentgewicht von 600 bis 2000 ist.

3. Verfahren nach Anspruch 1 oder 2, dadurch gekennzeichnet, daß die jeweiligen Schichtdicken der Komponenten A) bzw. B) 45 bis 250 µm betragen.

4. Verfahren nach einem oder mehreren der Ansprüche 1-3, dadurch gekennzeichnet, daß ein Folienband oder ein Abschnitt davon mit einer Stärke von 90 bis 500 µm aufgebracht wird.

5. Verfahren nach einem oder mehreren der Ansprüche 1 - 4, dadurch gekennzeichnet, daß in zweiter Stufe das Olefin-Polymere in einer Schichtdicke von 1,5 bis 4 mm aufgebracht wird.

6. Verfahren nach einem oder mehreren der Ansprüche 1 - 5, dadurch gekennzeichnet, daß das Folienband oder ein Abschnitt davon bei einer Vorwärmtemperatur des metallischen Substrats aufgebracht wird, die über dem Schmelzpunkt der Komponenten A) und B) liegt, für die Vernetzung der Komponente B) ausreicht und 200 bis 360°C, vorzugsweise 240 bis 310°C, beträgt.

7. Verfahren nach einem oder mehreren der Ansprüche 1 bis 6, dadurch gekennzeichnet, daß in zweiter Stufe Polyäthylen bei Auftragstemperaturen von höchstens 260°C bzw. bis 360, vorzugsweise bis 300°C in Form eines Bandes, ein Abschnitt davon oder als Pulver aufgebracht wird.

8. Metallische Substrate in Form von Rohren, Formteilen jeder Größe, Behältern und Bauelementen, beschichtet nach dem Verfahren nach einem oder mehreren der Ansprüche 1 bis 7.

9. Verwendung der metallischen Substrate nach Anspruch 8 in Form von Rohren als Rohrleitungen für Erdöl und Erdgas.

10. Verwendung der metallischen Substrate nach Anspruch 8 in Form von Deckeln und Kronenkorken in der Lebensmittelindustrie.